# EUROPEAN PATENT APPLICATION

(11) **EP 4 838 571 A1**
(43) Date of publication of application: **11.11.2026**
(21) Application number: 24916465.8
(22) Date of filing: 27.09.2024
(51) Int. Cl.: H01M 4/136, H01M 4/58, H01M 4/1397, H01M 10/058, H01M 10/0525

(54) **POSITIVE ELECTRODE PIECE, SECONDARY BATTERY, AND ELECTRIC DEVICE**

(30) Priority: 08.01.2024 CN 202410027211
(71) Applicant: Contemporary Amperex Technology Co., Limited, Ningde, Fujian 352100 (CN)
(72) Inventor: BIE, Changfeng, Ningde, Fujian 352100 (CN); SHANG, Yibo, Ningde, Fujian 352100 (CN); HUANG, Jichun, Ningde, Fujian 352100 (CN); HE, Siyuan, Ningde, Fujian 352100 (CN); NI, Huan, Ningde, Fujian 352100 (CN); HE, Jianfu, Ningde, Fujian 352100 (CN); WANG, Xinghui, Ningde, Fujian 352100 (CN); LIU, Na, Ningde, Fujian 352100 (CN)
(74) Representative: Gong, Jinping
(86) International application number: PCT/CN2024/121858
(87) International publication number: WO 2025/148414

(57) **Abstract**

A positive electrode plate is disclosed, comprising a current collector and a positive electrode active layer arranged on at least one surface of the current collector. The positive electrode active layer comprises a first active layer directly coated on the current collector and a second active layer coated on the surface of the first active layer at a side away from the current collector; the first active layer comprises a first lithium iron phosphate particle and/or a first lithium manganese iron phosphate particle, the second active layer comprises a second lithium iron phosphate particle, the primary average particle diameter of the first lithium iron phosphate particle and/or the first lithium manganese iron phosphate particle is 150 nm to 480 nm, and the primary average particle diameter of the second lithium iron phosphate particle is 500-3,000 nm.

## Description

### CROSS-REFERENCE TO RELATED APPLICATIONS

The present application claims priority to Chinese Patent Application No. 202410027211.8, entitled "POSITIVE ELECTRODE PLATE, SECONDARY BATTERY, AND ELECTRICAL APPARATUS" filed on January 08, 2024, which is incorporated by reference in the present application in its entity.

### TECHNICAL FIELD

The present application relates to the technical field of secondary batteries, and in particular to a positive electrode plate, a secondary battery, and an electrical apparatus.

### BACKGROUND

As a positive electrode material for lithium-ion batteries, lithium iron phosphate has rapidly become a global research hotspot due to its abundant resources, low price, environmental friendliness, and stable voltage in a two-phase reaction. The lithium iron phosphate positive electrode active materials used in existing positive electrode plates, such as nano-scale lithium iron phosphate and lithium manganese iron phosphate, have small particle sizes and high specific surface areas, and are highly hygroscopic when in contact with air, which makes them prone to side reactions on solid-liquid surfaces. Meanwhile, they are prone to roller sticking and stretching during a cold pressing process, and in turn a powder shedding phenomenon occurs. Thus, a content of the binder actually required for coating is high, and the high use amount of the binder actually affects the battery capacity.

### SUMMARY

The present application is conducted in view of the above issues, and an objective of the present application is to provide a positive electrode plate, a secondary battery, and an electrical apparatus. The positive electrode plate has a higher compacted density. The positive electrode plate has a high cohesion force and low hydroscopicity, and can maintain a high energy density.

A first aspect of the present application provides a positive electrode plate, including a current collector and a positive electrode active layer arranged on at least one face of the current collector. The positive electrode active layer includes a first active layer directly coated on the current collector and a second active layer coated on a surface of the first active layer at a side away from the current collector. The first active layer includes a first lithium iron phosphate particle and/or a first lithium manganese iron phosphate particle, and the second active layer includes a second lithium iron phosphate particle. A primary average particle size of the first lithium iron phosphate particle and/or the first lithium manganese iron phosphate particle is 150 nm-480 nm, and a primary average particle size of the second lithium iron phosphate particle is 500 nm-3,000 nm.

As described above, the positive electrode plate of the present application is provided with the positive electrode active layer including the first active layer and the second active layer. The first active layer includes a lithium iron phosphate particle and/or a lithium manganese iron phosphate particle (also referred to as "lithium (manganese) iron phosphate particle" for short) with a small primary average particle size near the current collector.

By allowing the primary average particle sizes of the first lithium iron phosphate particle and/or the first lithium manganese iron phosphate particle and the second lithium iron phosphate particle according to an embodiment of the present application to be within the aforementioned range, the particles of the first active layer and the second active layer can be maintained at an appropriate micron-scale dimension, thereby avoiding the problems of interfacial side reactions and processing difficulties brought about during nano-sizing of the particles, and preventing the reduction of kinetic performance caused by the particles being limited by an excessively large dimension.

Furthermore, the second active layer includes a lithium iron phosphate particle with a large primary average particle size away from the current collector. By forming this structure, due to a layer of large lithium iron phosphate particles arranged on the surface of the positive electrode plate according to an embodiment of the present application, the cohesion force of a surface layer can be improved. In addition, since the large lithium iron phosphate particle has a relatively large particle size and a small specific surface area, the hydroscopicity of the material can be reduced, thereby maintaining the high energy density of the positive electrode plate. Furthermore, by arranging the large lithium iron phosphate particles as the second active layer on an upper layer (an outer surface of the electrode plate), it can ensure that the large lithium iron phosphate particles as the second active layer achieve a better binding effect, and improve the compaction density of the positive electrode plate, and meanwhile a secondary battery having the positive electrode plate exhibits excellent kinetic performance.

In any embodiment, a cohesion force of the positive electrode plate is ≥ 32 N/m.

The cohesive force of the positive electrode plate of the present application as determined by the determining method described in the embodiments of the present application is within the aforementioned range, thereby avoiding a powder shedding phenomenon during the processing of the positive electrode plate and improving a binding force between a positive electrode surface and a separator.

In any embodiment, a thickness of the first active layer is in a range of 80 µm-140 µm, and in some embodiments in a range of 90 µm-120 µm; and a thickness of the second active layer is in a range of 8 µm-50 µm, and in some embodiments in a range of 20 µm-35 µm.

By setting the thicknesses of each group of the first active layer and the second active layer within the aforementioned range, the aforementioned technical effects of the present application can be further preferably achieved.

In any embodiment, a BET specific surface area of the first lithium iron phosphate particle and/or the first lithium manganese iron phosphate particle is 10 m²/g-18 m²/g, and in some embodiments the BET specific surface area is 12 m²/g-16 m²/g; and a BET specific surface area of the second lithium iron phosphate particle is 3 m²/g-8 m²/g, and in some embodiments the BET specific surface area is 4 m²/g-7 m²/g.

By allowing the BET specific surface areas of the first lithium iron phosphate particle, the second lithium iron phosphate particle, and/or the second lithium manganese iron phosphate particle according to the embodiments of the present application to be within the aforementioned ranges, respectively, it is beneficial to improve the stirring of the slurry containing the lithium iron phosphate particle and increase the solid content of the slurry, thereby improving the cell processing problem and in turn increasing the volumetric energy density of the battery.

In any embodiment, the sphericity of the first lithium iron phosphate particle and/or the first lithium manganese iron phosphate particle is ≤ 1.3, the sphericity of the second lithium iron phosphate particle is ≥ 1.5, and the first lithium iron phosphate particle and/or the first lithium manganese iron phosphate particle are more spherical than the second lithium iron phosphate particle.

Herein, the term "sphericity" can be measured by an aspect ratio of the particle. The smaller the aspect ratio, the better the sphericity. The aspect ratio is a ratio of a diameter along a major axis to a diameter along a minor axis of a primary particle. Let the diameter in the direction of the major axis be a and the diameter in the direction of the minor axis be b, then the aspect ratio = a/b. This parameter is often used for describing the morphology of particles and can be used for measuring their sphericity. The closer the value is to 1, the higher the sphericity.

The sphericity can be determined using the method described in the embodiments of the present application.

By ensuring that the sphericity of the first lithium iron phosphate particle and/or the first lithium manganese iron phosphate particle and the second lithium iron phosphate particle are each within the aforementioned range, the aforementioned technical effects of the present application can be further preferably achieved.

In any embodiment, the first lithium iron phosphate particle and/or the first lithium manganese iron phosphate particle has a molecular formula of Li_{x'}M1_{y'}Mn_{m'}Fe_{z'}M2_{k'}PO₄, wherein the M1 includes at least one or a combination of two or more of Na, K, Ca, Al and Mg, the M2 includes one or a combination of two or more of Ni, Cu, Zn, Ti, Nb, V, Cr and Co, 0.95 ≤ x' ≤ 1.15, 0≤ y' ≤ 0.1, 0.1 ≤ m' ≤ 0.9, 0.1 ≤ z' ≤ 1, 0 ≤ k' ≤ 0.1, and a content of the Mn is ≤ 1,000 ppm.

In the present application, the composition of the first lithium iron phosphate particle and/or the first lithium manganese iron phosphate particle is not particularly limited, and any existing small lithium (manganese) iron phosphate particle can be used. Illustratively, in the embodiments of the present application, by using the first lithium iron phosphate particle and/or the first lithium manganese iron phosphate particle having the aforementioned composition to form a double-layer structure with the second lithium iron phosphate particle in the embodiments of the present application, the aforementioned effects of the present application can be better achieved.

In any embodiment, the second lithium iron phosphate particle has a molecular formula of LiₘFeₓP_{y}OⱼQ_{q}, wherein the Q comprises at least one of Al, Na, K, Mg, Cu, Mn, Cr, Zn, Pb, Ca, Co, Ni, Sr, Nb, V, Ti, B, S, Si, N, S, F, Cl, and Br, 0.95 ≤ m ≤ 1.15, 0.9 ≤ x ≤ 1, 0.95 ≤ y ≤ 1, 3.5 ≤ j ≤ 4, and 0 < q ≤ 0.1.

By making the second lithium iron phosphate of the embodiments of the present application have the aforementioned molecular formula, and meanwhile by adding one or more of the aforementioned elements into it for modification, a high loading volume bulk phase modification of the second lithium iron phosphate particle is achieved. This helps to improve the bulk phase ion transport capability of the lithium iron phosphate particle and can effectively solve the problem of poor kinetic performance inherent in large particles. Furthermore, by performing the aforementioned modifications, the second lithium iron phosphate particle can exhibit good kinetic performance when used as a positive electrode material. In the present application, the modification may specifically be doping and/or cladding.

In any embodiment, the Q includes at least one of Ti, V, Mg, and Nb, and in some embodiments is Ti. The content of the Q is 1,000 ppm-10,000 ppm, and in some embodiments 2,500 ppm-6,000 ppm, based on the total weight of the second lithium iron phosphate particle.

By doping the lithium iron phosphate in the embodiments of the present application with one or more of the aforementioned elements and making the doping content within the aforementioned range, the metallic bulk phase modification of the second lithium iron phosphate particle can be better realized on the premise of ensuring the primary average particle size of the lithium iron phosphate particle, so as to further improve the bulk phase ion transmission capacity of the lithium iron phosphate particle, and better solve the problem of poor dynamic performance inherent in the large particles.

In any embodiment, the second lithium iron phosphate particle contains carbon, and a content of the carbon is 1.0%-2.0% by weight based on the total weight of the second lithium iron phosphate particle.

By setting the carbon content of the second lithium iron phosphate particle to 0.8%-2.0% by weight, carbon can be cladded on the surface of the second lithium iron phosphate particle to form a lithium iron phosphate material with a uniform and dense carbon cladding layer, which greatly improves the surface conductivity of the particle.

In any embodiment, the first lithium iron phosphate particle and/or the first lithium manganese iron phosphate particle, and the second lithium iron phosphate particle are each independently a monocrystalline particle and/or a polycrystalline particle, and in some embodiments, the number of the monocrystalline particle accounts for more than 90% based on the total number of the second lithium iron phosphate particle.

By employing monocrystalline lithium iron phosphate particles in each active layer of the positive electrode plate of the present application, the phenomenon of polycrystalline particles being crushed and causing delamination during cold pressing can be effectively avoided. This thus can improve a binding force between the second active layer and the first active layer or the separator, thereby improving the dynamic performance and energy density of the positive electrode plate.

In any embodiment, a capacity ratio η of the second lithium iron phosphate particle is ≥ 88%, and the η is defined as: charging and discharging a battery comprising the second lithium iron phosphate particle as a positive electrode material at a constant current and at a rate of 0.1 C twice in the voltage range of 2.0 V-3.75 V, and then charging and discharging at a constant current and at a rate of 1 C once, in the charge-discharge test with the rate of 1 C, a capacity value at a discharge voltage of 3.2 V is extracted and denoted as C1, and a capacity value at a discharge voltage to 2.0 V is extracted and denoted as C2, and η = C1/C2, wherein the charging process comprises charging at a constant voltage of 3.75 V and a constant-voltage cutoff current of 50 uA.

The capacity ratio η of the second lithium iron phosphate particle in the embodiments of the present application is ≥ 88%, indicating that the second lithium iron phosphate particle of the present application can enable a secondary battery to exhibit good kinetic performance when used as a positive electrode material.

In any embodiment, a process for manufacturing the second lithium iron phosphate particle includes: providing a raw material containing at least a lithium source, an iron source, a phosphorus source, a carbon source, a carbon film-forming agent, and a modifier, and performing sintering for at least two times, wherein the first sintering is conducted at a temperature of 500°C-760°C, and in some embodiments 550°C-720°C, and the carbon content of the material after the first sintering is 0.01%-0.79% by weight, and in some embodiments 0.05%-0.4% by weight; and the second sintering is conducted at a temperature of 700°C-800°C, and in some embodiments 720°C-780°C, and the carbon content of the material after the second sintering is 0.8%-2.0% by weight, and in some embodiments 1.0%-1.6% by weight.

In the process for preparing the second lithium iron phosphate particle according to the embodiments of the present application, sintering is implemented twice. By controlling the temperature of the first sintering within the aforementioned range and enabling the carbon content of an intermediate after the sintering to be within the aforementioned range, a lithium iron phosphate precursor obtained after the first sintering can have a larger primary particle size, directly improving the powder compaction and electrode plate compaction density of the final product. At the same time, the carbon source added before the first sintering can effectively reduce the trivalent iron in the raw material, improving the purity and stability of the product. By controlling the temperature of the second sintering within the aforementioned range and enabling the carbon content of the sintered material to be 0.8%-2.0% by weight, carbon can be cladded on the surface of the second lithium iron phosphate particle, thereby forming a lithium iron phosphate material with a uniform and dense carbon cladding layer to significantly improve the surface conductivity of the particle.

In any embodiment, a first pulverization is performed after the first sintering, and a second pulverization is performed after the second sintering. A Dv50 of the product after the first pulverization is 300 nm-1,200 nm, and in some embodiments 400 nm-1,100 nm; and a Dv50 of the product after the second pulverization is 500 nm-5,000 nm, and in some embodiments 700 nm-2,500 nm.

In the method for preparing the second lithium iron phosphate particle according to the embodiments of the present application, pulverization after sintering is implemented twice. By performing the first pulverization after the first sintering, the primary average particle size of the product is 300 nm-1,200 nm, which can avoid the growth barrier of carbon materials and modified elements on crystals and yield a micron-scale lithium iron phosphate precursor. By performing the second pulverization after the second sintering, the primary average particle size of the product is 500 nm-3,000 nm, which can yield a lithium iron phosphate particle of the desired particle size and yield a uniform and dense carbon cladding layer, significantly improving the surface conductivity of the particle.

In any embodiment, the first active layer and the second active layer may also optionally contain a conductive agent, a binder, and a dispersant. In the first active layer, a weight proportion of the first lithium iron phosphate particle and/or the first lithium manganese iron phosphate particle:the binder:the conductive agent:the dispersant is 96-99:0.5-3:0.5-3:0.5-3, and in some embodiments 96:1.0:2.5:0.5; and in the second active layer, a weight proportion of the second lithium iron phosphate particle:the binder:the conductive agent:the dispersant is 96-99:0.5-3:0.5-3:0.5-3, and in some embodiments 96.5:0.5:2.5:0.5. The weight ratio of the binder in the first active layer is less than or equal to that of the binder in the second active layer.

In any embodiment, the conductive agent includes any one or a combination of at least two of natural graphite, artificial graphite, conductive carbon black, a carbon fiber, a carbon nanotube, graphene, and a conductive polymer or metal powder, and in some embodiments conductive carbon black; the binder includes any one or a combination of at least two of polyvinylidene fluoride, a copolymer of vinylidene fluoride and hexafluoropropylene, or polytetrafluoroethylene, and in some embodiments polyvinylidene fluoride; the dispersant is not particularly limited, as long as it is a dispersant commonly used in the art, including PVP (polyvinylpyrrolidone), etc.

By using the aforementioned specific conductive agent, binder, and dispersant and allowing the weight proportion of the first lithium iron phosphate particle:the binder:the conductive agent:the dispersant to be within the aforementioned range, the positive electrode active layer of the present application can better achieve the aforementioned effects of the present application.

A second aspect of the present application provides a secondary battery, which includes the positive electrode plate in the first aspect of the present application.

A third aspect of the present application provides an electrical apparatus including the secondary battery of the second aspect of the present application.

### BRIEF DESCRIPTION OF THE DRAWINGS

FIG. 1 is a schematic structural diagram of a positive electrode plate according to an embodiment of the present application.
FIG. 2 is an electron microscope diagram of a positive electrode plate according to an embodiment of the present application.
FIG. 3 is a schematic diagram exemplifying a particle size of primary particles in the present application.
FIG. 4 is a schematic diagram of a secondary battery according to an embodiment of the present application.
FIG. 5 is an exploded view of the secondary battery shown in FIG. 4 according to an embodiment of the present application.
FIG. 6 is a schematic diagram of a battery module according to an embodiment of the present application.
FIG. 7 is a schematic diagram of a battery pack according to an embodiment of the present application.
FIG. 8 is an exploded view of the battery pack shown in FIG. 7 according to an embodiment of the present application.
FIG. 9 is a schematic diagram of an electrical apparatus using a secondary battery as a power source according to an embodiment of the present application.

Description of reference numerals:
1 battery pack; 2 upper box; 3 lower box; 4 battery module; 5 secondary battery; 51 case; 52 electrode assembly; 53 cover plate.

### DETAILED DESCRIPTION

The embodiments of a positive electrode plate, a secondary battery, and an electrical apparatus of the present application are described in detail hereafter. However, unnecessary detailed explanations may be omitted. For example, there are cases where detailed descriptions of well-known items and repeated descriptions of actually identical structures are omitted. This is to prevent the following description from becoming unnecessarily lengthy and to facilitate the understanding of those skilled in the art. In addition, the accompanying drawings and subsequent descriptions are provided for those skilled in the art to fully understand the present application, and are not intended to limit the subject matter recited in the claims.

In the present application, the "range" is defined in a form of a lower limit and an upper limit, and a given range is defined by selecting a lower limit and an upper limit, which define the boundaries of a particular range. The range defined by such way can be with or without end values, and can be arbitrarily combined, i.e., any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer ≥ 2, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application can be combined with each other to form new technical solutions.

Unless otherwise specified, all steps of the present application may be performed sequentially or randomly, and optionally sequentially. For example, the method comprises steps (a) and (b), meaning that the method may comprise steps (a) and (b) performed sequentially, or may comprise steps (b) and (a) performed sequentially. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, the condition "A or B" is met by either of the following: A is true (or exists) and B is false (or does not exist); A is false (or does not exist) and B is true (or exists); or both A and B are true (or exist).

The lithium iron phosphate positive electrode active materials used in existing positive electrode plates, such as nano-scale lithium iron phosphate and lithium manganese iron phosphate, have small particle sizes and high specific surface areas, and are highly hygroscopic. Generally, an active material layer of secondary particles is coated on the surface to improve the cohesion force on the surface of the electrode plate, but the secondary particles may crack and break during cold pressing.

Based on this, the present application proposes a positive electrode plate, which is designed to be coated with a layer of a primary particle material with a larger particle size on the surface thereof to improve the cohesion force on the surface of the electrode plate, thereby avoiding the problem of the secondary particles being crushed under pressure, and thus improving the dynamic performance and energy density.

### [Positive electrode plate]

The positive electrode plate according to an embodiment of the present application includes a current collector and a positive electrode active layer arranged on at least one face of the current collector. The positive electrode active layer includes a first active layer directly coated on the current collector and a second active layer coated on a surface of the first active layer at a side away from the current collector. The first active layer includes a first lithium iron phosphate particle and/or a first lithium manganese iron phosphate particle, and the second active layer includes a second lithium iron phosphate particle. A primary average particle size of the first lithium iron phosphate particle and/or the first lithium manganese iron phosphate particle is 150 nanometers (nm)-480 nm, and a primary average particle size of the second lithium iron phosphate particle is 500 nm-3,000 nm.

In some embodiments, the primary average particle size of the first lithium iron phosphate particle and/or the first lithium manganese iron phosphate particle may optionally be 150 nm, 160 nm, 170 nm, 180 nm, 190 nm, 200 nm, 210 nm, 220 nm, 230 nm, 240 nm, 250 nm, 260 nm, 270 nm, 280 nm, 290 nm, 300 nm, 310 nm, 320 nm, 330 nm, 340 nm, 350 nm, 360 nm, 370 nm, 380 nm, 390 nm, 400 nm, 410 nm, 420 nm, 430 nm, 440 nm, 450 nm, 460 nm, 470 nm or 480 nm, or a range between any two of the aforementioned values. In some embodiments, the primary average particle size of the second lithium iron phosphate particle may optionally be 500 nm, 600 nm, 650 nm, 700 nm, 790 nm, 800 nm, 870 nm, 900 nm, 920 nm, 1,000 nm, 1,100 nm, 1,200 nm, 1,250 nm, 1,300 nm, 1,400 nm, 1,500 nm, 1,600 nm, 1,700 nm, 1,800 nm, 1,900 nm, 2,000 nm, 2,100 nm, 2,200 nm, 2,300 nm, 2,400 nm, 2,500 nm, 2,600 nm, 2,700 nm, 2,800 nm, 2,900 nm or 3,000 nm, or a range between any two of the aforementioned values.

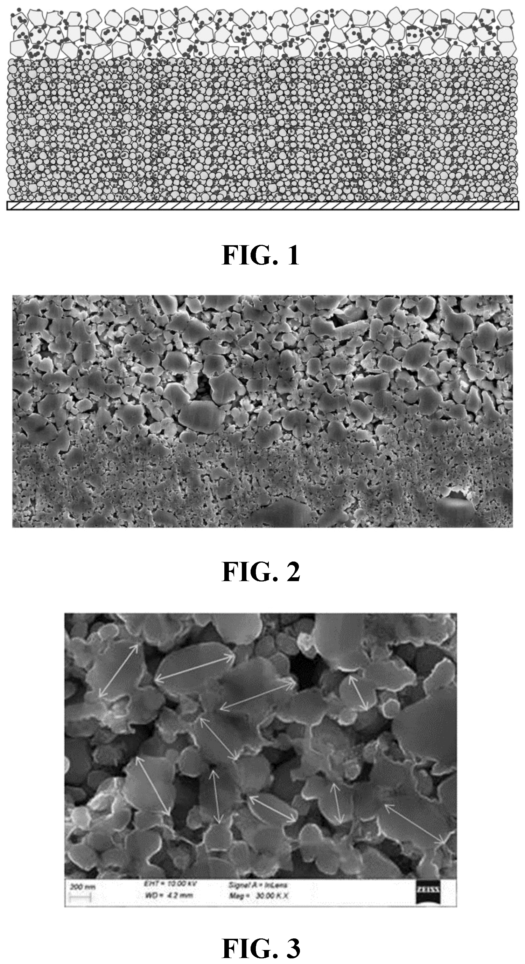

Herein, the term "primary average particle size" refers to a particle size value obtained by statistical analysis of a particle size of a particle using an aspect ratio statistical method under the field of view of a scanning electron microscope. During the particle size statistics process, particles with a primary average particle size of less than or equal to 80 nm are not included in the statistical range. The primary average particle size of the present application is shown in FIG. 3. The primary average particle size refers to an average particle size of primary particles. Herein, "primary particles" refer to particles that, as shown in the scanning electron microscope of the particles, do not have obvious agglomeration interfaces, but may have tiny pores and point or line defects, which are different from powder particles that are the smallest units without structures such as packing and flocculation. The methods for determining the primary average particle size, the carbon content described later, and the BET specific surface area can be performed using the determination methods described in the Examples.

As described above, the positive electrode plate of the present application is provided with the positive electrode active layer including the first active layer and the second active layer. The first active layer includes a lithium iron phosphate particle and/or a lithium manganese iron phosphate particle (also referred to as "lithium (manganese) iron phosphate particle" for short) with a small primary average particle size near the current collector.

By allowing the primary average particle sizes of the first lithium iron phosphate particle and/or the first lithium manganese iron phosphate particle and the second lithium iron phosphate particle according to an embodiment of the present application to be within the aforementioned range, the particles of the first active layer and the second active layer can be maintained at an appropriate micron-scale dimension, thereby avoiding the problems of interfacial side reactions and processing difficulties brought about during nano-sizing of the particles, and preventing the reduction of kinetic performance caused by the particles being limited by an excessively large dimension.

Furthermore, the second active layer includes a lithium iron phosphate particle with a large primary average particle size away from the current collector. By forming this structure, due to a layer of large lithium iron phosphate particles arranged on the surface of the positive electrode plate according to an embodiment of the present application, the cohesion force of a surface layer can be improved. In addition, since the large lithium iron phosphate particle has a relatively large particle size and a small specific surface area, the hydroscopicity of the material can be reduced, thereby maintaining the high energy density of the positive electrode plate. Furthermore, by arranging the large lithium iron phosphate particles as the second active layer on an upper layer (an outer surface of the electrode plate), it can ensure that the large lithium iron phosphate particles as the second active layer achieve a better binding effect, and improve the compaction density of the positive electrode plate, and meanwhile a secondary battery having the positive electrode plate exhibits excellent kinetic performance.

In any embodiment, a cohesion force of the positive electrode plate is ≥ 32 Newtons/meter (N/m).

The cohesive force of the positive electrode plate of the present application as determined by the determining method described in the embodiments of the present application is within the aforementioned range, thereby avoiding a powder shedding phenomenon during the processing of the positive electrode plate and improving a binding force between a positive electrode surface and a separator.

In any embodiment, a thickness of the first active layer is in a range of 80 micrometers (µm)-140 µm, and in some embodiments in a range of 90 µm-120 µm; and a thickness of the second active layer is in a range of 8 µm-50 µm, and in some embodiments in a range of 20 µm-35 µm.

In some embodiments, the thickness of the first active layer may optionally be 80 µm, 81 µm, 84 µm, 87 µm, 90 µm, 93 µm, 96 µm, 99 µm, 100 µm, 103 µm, 106 µm, 109 µm, 110 µm, 113 µm, 116 µm, 119 µm, 120 µm, 123 µm, 126 µm, 129 µm, 130 µm, 133 µm, 136 µm, 139 m or 140 µm, or a range between any of the aforementioned values. In some embodiments, the thickness of the first active layer may optionally be 8 µm, 11 µm, 14 µm, 17 µm, 19 µm, 21 µm, 24 µm, 27 µm, 30 µm, 34 µm, 37 µm, 40 µm, 43 µm, 46 µm, 49 µm or 50 µm, or a range between any two of the aforementioned values.

By setting the thicknesses of each group of the first active layer and the second active layer within the aforementioned range, the aforementioned technical effects of the present application can be further preferably achieved.

In any embodiment, a BET specific surface area of the first lithium iron phosphate particle and/or the first lithium manganese iron phosphate particle is 10 square meters/gram (m ²/g)-18 m²/g, and in some embodiments the BET specific surface area is 12 m²/g-16 m²/g; and a BET specific surface area of the second lithium iron phosphate particle is 3 m²/g-8 m²/g, and in some embodiments the BET specific surface area is 4 m²/g-7 m²/g.

In some embodiments, the BET specific surface area of the first lithium iron phosphate particle and/or the first lithium manganese iron phosphate particle may optionally be 10 m²/g, 11 m²/g, 12 m²/g, 13 m²/g, 14 m²/g, 15 m²/g, 16 m²/g, 17 m²/g or 8 m²/g, or a range between any two of the aforementioned values. In some embodiments, the BET specific surface area of the second lithium iron phosphate particle may optionally be 3 m²/g, 4 m²/g, 5 m²/g, 6 m²/g, 7 m²/g or 8 m²/g, or a range between any two of the aforementioned values. The method for determining the BET specific surface area can be performed using the determining method described in the Examples.

By allowing the BET specific surface areas of the first lithium iron phosphate particle, the second lithium iron phosphate particle, and/or the second lithium manganese iron phosphate particle according to the embodiments of the present application to be within the aforementioned ranges, respectively, it is beneficial to improve the stirring of the slurry containing the lithium iron phosphate particle and increase the solid content of the slurry, thereby improving the cell processing problem and in turn increasing the volumetric energy density of the battery.

In any embodiment, the sphericity of the first lithium iron phosphate particle and/or the first lithium manganese iron phosphate particle is ≤ 1.3, the sphericity of the second lithium iron phosphate particle is ≥ 1.5, and the sphericity of the first lithium iron phosphate particle and/or the first lithium manganese iron phosphate particle is higher than that of the second lithium iron phosphate particle.

Herein, the term "sphericity" can be measured by an aspect ratio of the particle. The smaller the aspect ratio, the better the sphericity. The aspect ratio is a ratio of a diameter along a major axis to a diameter along a minor axis of a primary particle. Let the diameter in the direction of the major axis be a and the diameter in the direction of the minor axis be b, then the aspect ratio = a/b. This parameter is often used for describing the morphology of particles and can be used for measuring their sphericity.

The sphericity can be determined using the method described in the embodiments of the present application.

By ensuring that the sphericity of the first lithium iron phosphate particle and/or the first lithium manganese iron phosphate particle and the second lithium iron phosphate particle are each within the aforementioned range, the aforementioned technical effects of the present application can be further preferably achieved.

### [Lithium iron phosphate particle and/or lithium manganese iron phosphate particle]

In any embodiment, the first lithium iron phosphate particle and/or the first lithium manganese iron phosphate particle has a molecular formula of Li_{x'}M1_{y'}Mn_{m'}Fe_{z'}M2_{k'}PO₄, wherein the M1 includes at least one or a combination of two or more of Na, K, Ca, Al and Mg, the M2 includes one or a combination of two or more of Ni, Cu, Zn, Ti, Nb, V, Cr and Co, 0.95 ≤ x' ≤ 1.15, 0≤ y' ≤ 0.1, 0.1 ≤ m' ≤ 0.9, 0.1 ≤ z' ≤ 1, 0 ≤ k' ≤ 0.1, and a content of the Mn is ≤ 1,000 parts per million (1,000 ppm).

In the present application, the composition of the first lithium iron phosphate particle and/or the first lithium manganese iron phosphate particle is not particularly limited, and any existing small lithium (manganese) iron phosphate particle can be used. Illustratively, in the embodiments of the present application, by using the first lithium iron phosphate particle and/or the first lithium manganese iron phosphate particle having the aforementioned composition to form a double-layer structure with the second lithium iron phosphate particle in the embodiments of the present application, the aforementioned effects of the present application can be better achieved.

### [Second lithium iron phosphate particle]

For the second lithium iron phosphate particle in the embodiments of the present application, the primary average particle size is 500 nm-3,000 nm, and in some embodiments 650 nm-2,500 nm; the BET specific surface area is 3 m²/g-8 m²/g, and in some embodiments 4 m²/g-7 m²/g. Based on the total weight of the second lithium iron phosphate particle, the carbon content of the second lithium iron phosphate particle is Cx% by weight, where 0.8 ≤ Cx ≤ 2.0, and in some embodiments 1.0 ≤ Cx ≤ 1.6. A ratio z of the BET specific surface area to the Cx satisfies 1.5 ≤ z ≤ 8.5, and in some embodiments satisfies 3 ≤ z ≤ 6.

By enabling the second lithium iron phosphate particle in the embodiments of the present application to have a primary average particle size of 500 nm-3000 nm, a BET specific surface area of 3 m²/g-8 m²/g, and a carbon content of Cx% by weight (0.8 ≤ Cx ≤ 2.0) as calculated based on the total weight of the second lithium iron phosphate particle and meanwhile enabling the ratio z of the BET specific surface area to the Cx of the second lithium iron phosphate particles (i.e. BET specific surface area/Cx) satisfies the range of 1.5 ≤ z ≤ 8.5, the kinetic performance of the second lithium iron phosphate particle with the primary average particle size within the aforementioned range can be improved. It maintains an appropriate micron-scale particle size of the particle, thus avoiding problems of interfacial side reactions and processing difficulties brought about during nano-sizing of the particles, and preventing the reduction in kinetic performance due to an excessively large dimension. Furthermore, it facilitates the stirring of a slurry containing the second lithium iron phosphate particle and increases the solid content, thereby improving cell processing issues and thus increasing the volumetric energy density of the battery. Additionally, it avoids the normal deintercalation of lithium ions from being affected by the excessively high carbon cladding density and thus affecting cell capacity.

Compared with the prior art, the second lithium iron phosphate particle in the embodiments of the present application has a smaller specific surface area when containing the same content of carbon, which means that there is less floating carbon in the particle. This can make the carbon contained in the second lithium iron phosphate particle more uniform and dense, and each particle is coated, thereby improving the surface conductivity of the particles and improving the kinetic performance of them as a positive electrode material.

In any embodiment, the second lithium iron phosphate has a molecular formula of LiₘFeₓP_{y}OⱼQ_{q}, where the Q includes at least one of Al, Na, K, Mg, Cu, Mn, Cr, Zn, Pb, Ca, Co, Ni, Sr, Nb, V, Ti, B, Si, N, S, F, Cl, 0.95 ≤ m ≤ 1.15, 0.9 ≤ x ≤ 1, 0.95 ≤ y ≤ 1, 3.5 ≤ j ≤ 4, and 0 < q ≤ 0.1.

By making the second lithium iron phosphate of the embodiments of the present application have the aforementioned molecular formula, and meanwhile by adding one or more of the aforementioned elements into it for modification, a high loading volume bulk phase modification of the second lithium iron phosphate particle is achieved. This helps to improve the bulk phase ion transport capability of the second lithium iron phosphate particle and can effectively solve the problem of poor kinetic performance inherent in large particles. Furthermore, by performing the aforementioned modifications, the second lithium iron phosphate particle can exhibit good kinetic performance when used as a positive electrode material. In the present application, the modification may specifically be doping and/or cladding.

In any embodiment, the Q includes at least one of Ti, V, Mg, and Nb, and in some embodiments is Ti. The content of the Q is 1,000 ppm-10,000 ppm, and in some embodiments 2,500 ppm-6,000 ppm, based on the total weight of the second lithium iron phosphate particle. In some embodiments, as calculated based on the total weight of the second lithium iron phosphate particle, the content of the Ti, V, Mg and/or Nb may optionally be 2,500 ppm, 2,600 ppm, 2,700 ppm, 2,800 ppm, 2,900 ppm, 3,000 ppm, 3,100 ppm, 3,200 ppm, 3,300 ppm, 3,400 ppm, 3,500 ppm, 3,600 ppm, 3,700 ppm, 3,800 ppm, 3,900 ppm, 4,000 ppm, 4,100 ppm, 4,200 ppm, 4,300 ppm, 4,400 ppm, 4,500 ppm, 4,600 ppm, 4,700 ppm, 4,800 ppm, 4,900 ppm, 5,000 ppm, 5,100 ppm, 5,200 ppm, 5,300 ppm, 5,400 ppm, 5,500 ppm, 5,600 ppm, 5,700 ppm, 5,800 ppm, 5,900 ppm or 6,000 ppm, or a range between any two of the aforementioned values.

By adding one or more of the aforementioned elements into the second lithium iron phosphate in the embodiments of the present application and making the adding content within the aforementioned range, the metallic bulk phase modification of the second lithium iron phosphate particle can be better realized on the premise of ensuring the primary average particle size of the second lithium iron phosphate particle, so as to further improve the bulk phase ion transmission capacity of the second lithium iron phosphate particle, and better solve the problem of poor dynamic performance inherent in the large particles.

In any embodiment, the second lithium iron phosphate particle contains carbon, and a content of the carbon is 1.0%-2.0% by weight based on the total weight of the second lithium iron phosphate particle.

In the second lithium iron phosphate particle of the embodiments of the present application, the carbon may exist in a state that is mixed with the second lithium iron phosphate particle or in a state that is cladded on the second lithium iron phosphate particle. The carbon in the second lithium iron phosphate particle can be selected to be in the state of being cladded on the second lithium iron phosphate particle, thereby enabling the carbon to form a uniform and dense carbon cladding layer on the surface of the second lithium iron phosphate particle, and thus improving the surface conductivity of the particle.

In any embodiment, a capacity ratio η of the second lithium iron phosphate particle is ≥ 88%, and the η is defined as: charging and discharging a battery comprising the second lithium iron phosphate particle as a positive electrode material at a constant current and at a rate of 0.1 coulomb (C) twice in the voltage range of 2.0 volts (V)-3.75 V, and then charging and discharging at a constant current and at a rate of 1 C once, in the charge-discharge test with the rate of 1 C, a capacity value at a discharge voltage of 3.2 V is extracted and denoted as C1, and a capacity value at a discharge voltage to 2.0 V is extracted and denoted as C2, and η = C1/C2, wherein the charging process comprises charging at a constant voltage of 3.75 V and a constant-voltage cutoff current of 50 microamperes (uA).

The η represents a plateau retention performance of the material, and this value is strongly correlated with the discharge power performance of the battery. When this value is large, the battery can still maintain good power performance when discharged to a low SOC (state of charge of the battery), meaning that the voltage drop of the battery is small when the battery is discharged at a high current at a low electric quantity. The capacity ratio η of the second lithium iron phosphate particle in the embodiments of the present application is ≥ 88%, indicating that the second lithium iron phosphate particle of the present application can enable a secondary battery to exhibit good kinetic performance when used as a positive electrode material.

In any embodiment, the second lithium iron phosphate particle satisfies at least one of the following a)-f):
a) a Dv10 of the second lithium iron phosphate particle is ≥ 0.2 µm;
b) a Dv50 of the second lithium iron phosphate particle is 0.5-5 µm;
c) a Dv90 of the second lithium iron phosphate particle is ≤ 8 µm;
d) a Dv99 of the second lithium iron phosphate particle is ≤ 10 µm;
e) a powder compaction density of the second lithium iron phosphate under a pressure of 3 T is ≥ 2.25 grams/cubic centimeters/cm3 (g/cm³);
f) the powder resistivity of the second lithium iron phosphate is less than 60 ohm·meters (Ω·cm).

In the present application, the aforementioned Dv10, Dv90 and Dv99 refer to the corresponding particle sizes when the volume cumulative particle size distribution percentages in the particles reach 10%, 90% and 99%, respectively. The testing method is the same as that for Dv50 mentioned above, and the standard in the embodiments of the present application can be used for determination.

It should be noted that Dv10 is a larger-the-better indicator, so no upper limit can be given; and the Dv90 is a smaller-the-better indicator, so no lower limit can be given.

By ensuring that the second lithium iron phosphate particle satisfies at least one of a)-f), the second lithium iron phosphate particle can achieve the aforementioned technical effects better.

In the present application, the method for testing the powder resistivity is: referring to the national standard GB/T 33822-2017, a powder resistivity meter (Suzhou Lattice Electronics Co., LTD., model ST2722) is employed. 1 gram (g) of a sample (with an error within ±0.005 g) is weighed and added to a feeding chamber. A pressure of 8 MPa is applied, and the forward resistivity and reverse resistivity of the sample are tested, respectively. The average value of the two is taken as the powder resistivity of the sample.

In the present application, the powder compaction density is defined as: during an external force compression process, as the powder moves and deforms, larger voids are filled, the contact area among particles increases, attractive forces are generated among atoms, and the mechanical fit among the particles is enhanced, thereby forming a density of a pressed compact with a certain density and strength, with the unit of the density being g/cm³.

The method for testing the compaction density is: referring to the national standard GB/T 24533-2009, a certain amount of powder is placed on a compaction mold, with the center of the mold being hollow and each one metal disc being placed above and below the mold. The powder is placed between the metal discs, and a metal cylinder is placed on the top. The mold is placed on a compaction density instrument, and different pressures are set. The thickness of the powder under different pressures can be read on the device. The compaction density is calculated via ρ = m/v.

According to the following calculation results of powder compaction density, ρc = m/V = m/(S × H); where ρc is the powder compaction density (g/cm³), m is the mass of the weighed material (g), S is the bottom area of the mold (1.327 square centimeters (cm²)), and H is the height of the compacted sample (centimeters (cm)).

In some embodiments, the carbon content of the second lithium iron phosphate particle may optionally be 0.8%, 0.9%, 1%, 1.1%, 1.2%, 1.3%, 1.4%, 1.5%, 1.6%, 1.7%, 1.8%, 1.9% or 2.0% by weight, or a range between any two of the aforementioned values.

By setting the carbon content of the second lithium iron phosphate particle to 0.8%-2.0% by weight, carbon can be cladded on the surface of the second lithium iron phosphate particle to form a lithium iron phosphate material with a uniform and dense carbon cladding layer, which greatly improves the surface conductivity of the particle.

In the lithium iron phosphate particle of the embodiments of the present application, the carbon may exist in a state that is mixed with the second lithium iron phosphate particle or in a state that is cladded on the second lithium iron phosphate particle. In some embodiments, the carbon in the second lithium iron phosphate particle is presented in the state of being cladded on the second lithium iron phosphate particle, thereby enabling the carbon to form a uniform and dense carbon cladding layer on the surface of the second lithium iron phosphate particle, and thus improving the surface conductivity of the particle.

In any embodiment, the second lithium iron particle is a monocrystalline particle and/or a polycrystalline particle. In some embodiments, based on the total particle number of the second lithium iron particle, the number of the monocrystalline particle accounts for more than 90%.

By employing monocrystalline lithium iron phosphate particles of the aforementioned proportion in each active layer of the positive electrode plate of the present application, the phenomenon of polycrystalline particles being crushed and causing delamination during cold pressing can be effectively avoided. This thus can improve a binding force between the second active layer and the first active layer or the separator, thereby improving the dynamic performance and energy density of the positive electrode plate.

### [Method for preparing the second lithium iron phosphate particle]

In any embodiment, a process for manufacturing the second lithium iron phosphate particle includes: providing a raw material containing at least a lithium source, an iron source, a phosphorus source, a carbon source, a carbon film-forming agent, and a modifier, and performing sintering for at least two times, wherein the first sintering is conducted at a temperature of 500 degrees Celsius (°C)-760°C, and in some embodiments 550°C-720°C, and the carbon content of the material after the first sintering is 0.01%-0.79% by weight, and in some embodiments 0.05%-0.4% by weight; and the second sintering is conducted at a temperature of 700°C-800°C, and in some embodiments 720°C-780°C, and the carbon content of the material after the second sintering is 0.8%-2.0% by weight, and in some embodiments 1.0%-1.6% by weight.

In some embodiments, the temperature of the first sintering may optionally be 500°C, 510°C, 520°C, 530°C, 540°C, 550°C, 560°C, 570°C, 580°C, 590°C, 600°C, 610°C, 620°C, 630°C, 640°C, 650°C, 660°C, 670°C, 680°C, 690°C, 700°C, 710°C, 720°C, 730°C, 740°C, 750°C or 760°C, or a range between any two of the aforementioned values. The temperature for the second sintering may optionally be 700°C, 710°C, 720°C, 730°C, 740°C, 750°C, 760°C, 770°C, 780°C, 790°C or 800°C, or a range between any two of the aforementioned values. The carbon content of the material after the first sintering may optionally be 0.01%, 0.05%, 0.10%, 0.15%, 0.2%, 0.25%, 0.3%, 0.35%, 0.4%, 0.45%, 0.5%, 0.55%, 0.6%, 0.65%, 0.7%, 0.75%, or 0.79% by weight, and the carbon content of the material after the second sintering may be 0.8% - 2.0%, optionally 0.8%, 0.9%, 1%, 1.1%, 1.2%, 1.3%, 1.4%, 1.5%, 1.6%, 1.7%, 1.8%, 1.9%, or 2.0% by weight, or a range between any two of the aforementioned values.

In the process for preparing the second lithium iron phosphate particle according to the embodiments of the present application, sintering is implemented twice. By controlling the temperature of the first sintering within the aforementioned range and enabling the carbon content of the intermediate after the sintering to be within the aforementioned range, the lithium iron phosphate precursor obtained after the first sintering can have a larger particle size, which directly improves the powder compaction and electrode plate compaction density of the final product. Furthermore, by adding a lower content of a carbon source during the first sintering, the barrier effect of the carbon layer on the growth process of lithium iron phosphate particles is greatly reduced, which is conducive to the crystallization growth of the particles at a lower temperature. At the same time, it is also conducive to the solid-phase diffusion reaction between the modifier and the lithium iron phosphate material, thereby achieving a higher concentration of metal ion doping. Compared with a traditional method that uses a high temperature to achieve particle growth, the aforementioned preparation method of the present application can first synthesize large particles at a lower temperature, which can improve the phenomenon of cracking of the carbon layer on the particle surface at a high temperature and improve the compactness of the surface carbon. At the same time, during the first sintering process, the carbon source can effectively reduce the trivalent iron in the raw material, improving the purity and stability of the product. By controlling the temperature of the second sintering within the aforementioned range and making the carbon content of the sintered material be 0.8%-2.0% by weight, carbon can be cladded on the surface of the second lithium iron phosphate particle to form a lithium iron phosphate material with a uniform and dense carbon cladding layer, which significantly improves the surface conductivity of the particle.

In any embodiment, a first pulverization is performed after the first sintering, and a second pulverization is performed after the second sintering. A Dv50 of the product after the first pulverization is 300 nm-1,200 nm, and in some embodiments 400 nm-1,100 nm; and a Dv50 of the product after the second pulverization is 500 nm-5,000 nm, and in some embodiments 700 nm-2,500 nm.

In some embodiments, the Dv50 of the product after the first pulverization is 300 nm, 400 nm, 500 nm, 600 nm, 700 nm, 800 nm, 900 nm, 1,000 nm, 1,100 nm, or 1,200 nm, or a range between any two of the aforementioned values. In some embodiments, the Dv50 of the product after the second pulverization is 500 nm, 600 nm, 700 nm, 800 nm, 900 nm, 1,000 nm, 1,100 nm, 1,200 nm, 1,300 nm, 1,400 nm, 1,500 nm, 1,600 nm, 1,700 nm, 1,800 nm, 1,900 nm, 2,000 nm, 2,300 nm, 2,500 nm, 2,700 nm, 3,000 nm, 3,300 nm, 3,500 nm, 3,700 nm, 4,000 nm, 4,300 nm, 4,500 nm, 4,700 nm, 5,000 nm, or a range between any two of the aforementioned values.

Herein, the term "Dv50" refers to a corresponding particle size when the volume cumulative particle size distribution percentage in the particle reaches 50%. The determination of the Dv50 can be performed using the determining method described in the Examples.

In the method for preparing the second lithium iron particle according to the embodiments of the present application, pulverization after sintering is implemented twice. By performing the first pulverization after the first sintering, the primary average particle size of the product is 300 nm-1,200 nm, which can avoid the growth barrier of carbon materials and modified elements on crystals and yield a micron-scale lithium iron phosphate precursor. By performing the second pulverization after the second sintering, the primary average particle size of the product is 500 nm-5000 nm, which can yield a lithium iron phosphate particle of the desired particle size and yield a uniform and dense carbon cladding layer, significantly improving the surface conductivity of the particle.

In any embodiment, the first active layer and the second active layer may also optionally contain a conductive agent, a binder, and a dispersant. In the first active layer, a weight proportion of the first lithium iron phosphate particle and/or the first lithium manganese iron phosphate particle:the binder:the conductive agent:the dispersant is 96-99:0.5-3:0.5-3:0.5-3, and in some embodiments 96:1.0:2.5:0.5; and in the second active layer, a weight proportion of the second lithium iron phosphate particle:the binder:the conductive agent:the dispersant is 96-99:0.5-3:0.5-3:0.5-3, and in some embodiments 96.5:0.5:2.5:0.5. The weight ratio of the binder in the first active layer is less than or equal to that of the binder in the second active layer.

In any embodiment, the conductive agent includes any one or a combination of at least two of natural graphite, artificial graphite, conductive carbon black, a carbon fiber, a carbon nanotube, graphene, and a conductive polymer or metal powder, and in some embodiments conductive carbon black; and the binder includes any one or a combination of at least two of polyvinylidene fluoride, a copolymer of vinylidene fluoride and hexafluoropropylene, or polytetrafluoroethylene, and in some embodiments polyvinylidene fluoride.

By using the aforementioned specific conductive agent, binder, and dispersant and allowing the weight proportion of the first lithium iron phosphate particle:the binder:the conductive agent:the dispersant to be within the aforementioned range, the positive electrode active layer of the present application can better achieve the aforementioned effects of the present application.

In any embodiment, the method for preparing the second lithium iron phosphate salt particle includes: providing a raw material containing at least a lithium source, an iron source, a phosphorus source, a carbon source, a modifier, and a carbon film-forming agent, wherein a mixing ratio of the lithium source, the iron source, and the phosphorus source, in terms of the atomic molar number of each element, satisfies Fe∶P = 0.96-0.985 and Li∶Fe = 1.0-1.1∶0.95-1.1; and the carbon source and carbon film-forming agent, in terms of a weight ratio, satisfy the carbon source∶the carbon film-forming agent = 9∶1-2∶8.

In some embodiments, the mixing ratio of the iron source to the phosphorus source, in terms of the atomic molar number of each element, satisfies: Fe:P = 0.96:1, Fe:P = 0.965:1, Fe:P = 0.97:1, Fe:P = 0.975:1, Fe:P = 0.98:1, or Fe:P = 0.985:1.

In some embodiments, the mixing ratio of the lithium source to the iron source, in terms of the atomic molar number of each element, satisfies: Li:Fe = 1.0:1.1, Li:Fe = 0.99:1.1, Li:Fe = 0.98:1.1, Li:Fe = 0.97:1.1, Li:Fe = 0.96:1.1, or Li:Fe = 0.95:1.1.

In some embodiments, the weight ratio of the carbon source to the carbon film-forming agent may optionally be 9:1, 8:2, 7:3, 6:4, 5:5, 4:6, 3:7 or 2:8.

By using a raw material containing the lithium source, the iron source, the phosphorus source, the carbon source, the modifier, and the carbon film-forming agent in the aforementioned proportions, the primary average particle size, the carbon content, the BET specific surface area and the z value of the second lithium iron phosphate particle in the first aspect of the present application can be well formed. Specifically, as described above, by allowing the primary average particle size of the second lithium iron phosphate particle in the embodiments of the present application to be 500 nm-3,000 nm, the particles can be maintained at an appropriate micron-scale dimension, thereby avoiding the problems of interfacial side reactions and processing difficulties brought about during nano-sizing of the particles, and preventing the reduction of kinetic performance caused by the particles being limited by an excessively large dimension. Furthermore, by allowing the BET specific surface area of the second lithium iron phosphate particle in the embodiments of the present application to be 3 m²/g-8 m²/g, it is beneficial to improve the stirring of the slurry containing the lithium iron phosphate particle and increase the solid content of the slurry, thereby improving the cell processing problem and in turn increasing the volumetric energy density of the battery. Moreover, by allowing the ratio z of the BET specific surface area to Cx of the second lithium iron phosphate particle in the embodiments of the present application satisfies the range of 1.5 ≤ z ≤ 8.5, the carbon contained in the second lithium iron phosphate particle can be made more uniform and dense, thereby improving the surface conductivity of the particle.

In any embodiment, in the method for preparing the second lithium iron phosphate particle, the lithium source is a lithium compound, including one or more of lithium dihydrogen phosphate, lithium oxalate, lithium carbonate, lithium oxide, lithium hydroxide, and lithium acetate, and in some embodiments lithium carbonate; the iron source is an iron compound, including at least one of ferric hydroxide, ferrous chloride, ferric oxide, ferric phosphate, ferric pyrophosphate, ferrous oxalate, iron powder, ferric nitrate, ferro ferric oxide, and ferric oxyhydroxide, and in some embodiments ferric oxide; the phosphorus source is a phosphoric acid compound, including one or more of phosphoric acid, ammonium dihydrogen phosphate, and dihydrogen phosphate, and in some embodiments phosphoric acid; the modifier includes at least one of titanium dioxide, vanadium pentoxide, n-butyl titanate, ammonium metavanadate, niobium ethoxide, niobium oxalate, niobium pentoxide, magnesium hydroxide and magnesium nitrate, and in some embodiments titanium dioxide; the carbon source includes at least one of citric acid, glucose, sucrose, starch, fructose and lactose, and in some embodiments glucose; and the carbon film-forming agent includes a combination of one or more of polyethylene glycol, polyaniline, polyacrylonitrile, polyvinylpyrrolidone and polyvinyl alcohol, and in some embodiments polyaniline.

By selecting the aforementioned substances as the lithium source, the iron source, the phosphorus source, the modifier, the carbon source, and the carbon film-forming agent used in the method for preparing the second lithium iron phosphate particle in the embodiments of the present application, the primary average particle size, the carbon content, the BET specific surface area and the z value of the second lithium iron phosphate particle in the embodiments of the present application can be well formed. This allows for a better realization of the large particle size of the second lithium iron phosphate particle in the embodiments of the present application, while achieving excellent kinetic performance when it is used as a positive electrode material.

In any embodiment, the heating rates in the first sintering and the second sintering are each independently 2 degrees Celsius/minute (°C/min)-20°C/min, the first sintering constant-temperature time is 1 hour (h)-6 h, and the second sintering constant-temperature time is 2 h-12 h.

In some embodiments, the heating rates in the first sintering and the second sintering are each independently 2°C/min, 5°C/min, 7°C/min, 10°C/min, 13°C/min, 15°C/min, 17°C/min or 20°C/min.

In some embodiments, a constant-temperature sintering time for the first sintering is 1 h-6 h. In some embodiments, a constant-temperature sintering time for the first sintering may optionally be 1 h, 1.5 h, 2 h, 2.5 h, 3 h, 3.5 h, 4 h, 4.5 h, 5 h, 5.5 h or 6 h.

In some embodiments, a constant-temperature sintering time for the second sintering is 2 h-12 h. In some embodiments, a constant-temperature sintering time for the second sintering may optionally be 1 h, 1.5 h, 2 h, 2.5 h, 3 h, 3.5 h, 4 h, 4.5 h, 5 h, 5.5 h, 6 h, 6.5 h, 7 h, 7.5 h, 8 h, 8.5 h, 9 h, 9.5 h, 10 h, 10.5 h, 11 h, 11.5 h or 12 h.

By controlling the heating rates and constant-temperature times in the first sintering and the second sintering within the aforementioned range, it can prevent excessive side reactions during sintering due to excessively rapid heating, which thus will affect the primary average particle size, carbon content, BET specific surface area, and z value of the obtained second lithium iron phosphate particle. This allows for a better realization of the large particle size of the second lithium iron phosphate particle in the embodiments of the present application, while achieving excellent kinetic performance when it is used as a positive electrode material.

In any embodiment, after the first sintering and before the second sintering, the product after the first sintering is cladded with carbon, and the amount of carbon cladding is 0.01-1.99%, and in some embodiments 0.2-1.5%. In some embodiments, it is 0.2 %-1.6% by weight, and in some embodiments, it is particularly 0.2%, 0.3%, 0.4%, 0.5%, 0.6%, 0.7%, 0.8%, 0.9%, 1.0%, 1.1%, 1.2%, 1.3%, 1.4%, 1.5% or 1.6% by weight, or a range between any two of the aforementioned values.

By cladding the product after the first sintering with carbon of the aforementioned content range after the first sintering and before the second sintering, a uniform and dense carbon cladding layer can be formed on the surface of the lithium iron phosphate particle during the second sintering process.

In any embodiment, the carbon cladding is performed by vapor deposition during sintering or by carbonizing the carbon source to clad the carbon at high temperature.

In the method for preparing the second lithium iron phosphate particle of the embodiments of the present invention, the implementation of the carbon cladding is not particularly limited. In some embodiments, the carbon cladding of the second lithium iron phosphate particle is performed by vapor deposition, thereby forming a uniform and dense carbon cladding layer on the surface of the second lithium iron phosphate particle. In any embodiment, after the first sintering and after the second sintering, the sintered product is pulverized. The pulverization can be selected from one or more of mechanical crushing, sand milling, and airflow crushing.

In the method for preparing the second lithium iron phosphate particle of the embodiments of the present invention, the pulverization manner is not particularly limited. By adopting the specific pulverization method described above, it is beneficial to obtain the desired primary average particle size.

In the method for preparing the second lithium iron phosphate particle of the embodiments of the present invention, the pulverization manner is not particularly limited. By adopting the specific pulverization method described above, it is beneficial to obtain the desired primary average particle size.

### [Current collector]

In some embodiments, a metal foil or a composite current collector can be employed as the positive electrode current collector. For example, if it is the metal foil, an aluminum foil can be adopted. The composite current collector may include a polymer material base layer and a metal layer formed on at least one surface of the polymer material base layer. The composite current collector can be formed by forming an aluminium foil on a polymer material substrate (e.g., polypropylene (PP), polyethylene terephthalate (PET), polybutylene terephthalate (PBT), polystyrene (PS), polyethylene (PE) and the like substrates).

### [Negative electrode plate]

The negative electrode plate includes a negative electrode current collector and a negative electrode film layer arranged on at least one surface of the negative electrode current collector, and the negative electrode film layer includes a negative electrode active material.

For example, the negative electrode current collector has two surfaces opposite to each other in a thickness direction of the negative electrode current collector, and the negative electrode film layer is arranged on either or both of the two opposite surfaces of the negative electrode current collector.

In some embodiments, a metal foil or a composite current collector can be employed as the negative electrode current collector. For example, a copper foil can be employed as the metal foil. The composite current collector may include a polymer material base layer and a metal layer formed on at least one surface of the polymer material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. By way of example, the negative electrode active material may include at least one of the following materials: artificial graphite, natural graphite, soft carbon, hard carbon, a silicon-based material, a tin-based material, lithium titanate, etc. The silicon-based material may be selected from at least one of the group consisting of elemental silicon, a silicon-oxygen compound, a silicon-carbon composite, a silicon-nitrogen composite, or a silicon alloy. The tin-based material may be selected from at least one of the group consisting of elemental tin, a tin-oxygen compound, and a tin alloy. However, the present application is not limited to these materials. Other traditional materials that can be used as negative electrode active materials for batteries may also be used. These negative electrode active materials may be used alone or in a combination of two or more thereof.

In some embodiments, the negative electrode film layer further optionally includes a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other auxiliary agents, for example a thickener (e.g., sodium carboxymethyl cellulose (CMC-Na)), etc.

In some embodiments, the negative electrode plate can be prepared by the following manner: dispersing the components for preparing the negative electrode plate, e.g. the negative electrode active material, the conductive agent, the binder and any other component into a solvent (e.g. deionized water) to form a negative electrode slurry; and coating the negative electrode current collector with the negative electrode slurry, and performing oven-drying, cold pressing and the like procedures to obtain the negative electrode plate.

### [Electrolyte]

The electrolyte plays the role of conducting ions between the positive electrode plate and the negative electrode plate. The present application has no specific limitation on the type of the electrolyte, which may be selected according to requirements. For example, the electrolyte may be liquid, gelled, or all solid.

In some embodiments, an electrolyte solution is used as the electrolyte. The electrolyte solution contains an electrolyte salt and a solvent.

In some embodiments, the electrolyte salt may be selected from at least one of the group consisting of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of the group consisting of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery includes a separator. The present application has no particular limitation on the type of the separator, and any well-known separator of a porous structure with good chemical stability and mechanical stability can be selected for use.

In some embodiments, the material of the separator can be selected from the group consisting of at least one of glass fiber, non-woven fabric, polyethylene, polypropylene and polyvinylidene fluoride. The separator can be a single-layer film or a multi-layer composite film, which is not specially limited. When the separator is a multi-layer composite film, the material of each layer may be the same or different, which is not particularly limited.

### [Secondary battery]

In an embodiment of the present application, a secondary battery is provided, which includes the positive electrode plate.

Generally, the secondary battery includes a positive electrode plate, a negative electrode plate, an electrolyte and a separator. During the charging and discharging process of the battery, active ions are intercalated and deintercalated back and forth between the positive electrode plate and the negative electrode plate. The electrolyte plays the role of conducting ions between the positive electrode plate and the negative electrode plate. The separator is disposed between the positive electrode plate and the negative electrode plate, and mainly functions to prevent a short circuit between the positive electrode and the negative electrode while allowing ions to pass through.

In some embodiments, the positive electrode plate, the negative electrode plate, and the separator may be formed into an electrode assembly through a winding process or a lamination process.

In some embodiments, the secondary battery can include an outer package. The outer package may be used for encapsulating the electrode assembly and the electrolyte.

In some embodiments, the outer package of the secondary battery may be a hard shell, e.g., a hard plastic shell, an aluminum shell, a steel shell, etc. The outer package of the secondary battery can also be a soft package, such as a bag type soft package. The material of the soft package may be plastic, and examples of the plastic may include polypropylene, polybutylene terephthalate, polybutylene succinate, and the like.

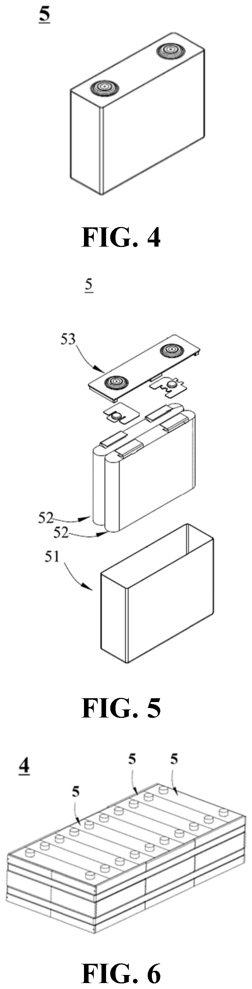

The shape of the secondary battery is not particularly limited in the present application, and may be a cylinder, a square, or any other shape. For example, FIG. 4 shows a secondary battery 5 with a square structure as an example.

In some embodiments, referring to FIG. 5, the outer package can include a case 51 and a cover plate 53. The case 51 may include a bottom plate and a side plate connected to the bottom plate, and the bottom plate and the side plate enclose to form an accommodating cavity. The case 51 has an opening in communication with the accommodating cavity, and the cover plate 53 may cover the opening to close the accommodating cavity. The positive electrode plate, the negative electrode plate and the separator may be formed into an electrode assembly 52 by a winding process or a stacking process. The electrode assembly 52 is encapsulated within the accommodating cavity. The electrode assembly 52 is impregnated with the electrolyte solution. The number of electrode assemblies 52 included in the secondary battery 5 may be one or more, and may be selected by those skilled in the art according to specific actual requirements.

In some embodiments, the secondary battery can be assembled into a battery module, the number of the secondary batteries contained in the battery module can be one or more, and the specific number can be selected by those skilled in the art according to the application and capacity of the battery module.

FIG. 6 shows a battery module 4 as an example. Referring to Fig. 6, in the battery module 4, a plurality of secondary batteries 5 can be sequentially arranged along the length direction of the battery module 4. Of course, any other arrangement is also possible. The plurality of secondary batteries 5 can be further fixed by fasteners.

In some embodiments, the battery module 4 may further include a shell having an accommodating space, in which the plurality of secondary batteries 5 are accommodated.

In some embodiments, the aforementioned battery modules can also be assembled into a battery pack, the number of the battery modules contained in the battery pack can be one or more, and the specific number can be selected by those skilled in the art according to the application and capacity of the battery pack.

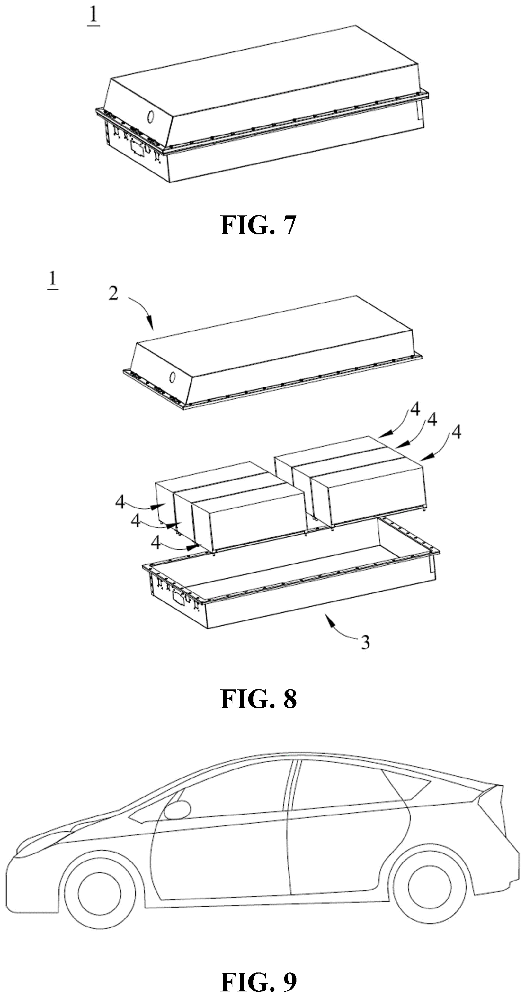

FIGs. 7 and 8 show a battery pack 1 as an example. Referring to FIGs. 7 and 8, the battery pack 1 can include a battery box and a plurality of battery modules 6 arranged in the battery box. The battery box includes an upper box 2 and a lower box 3, where the upper box 2 can cover the lower box 3 and forms an enclosed space for accommodating the battery module 4. The plurality of battery modules 4 may be arranged in the battery box in any manner.

### [Electrical apparatus]

Furthermore, the present application further provides an electrical apparatus, which includes at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus can include a mobile device (e.g. a mobile phone, a laptop, etc.), an electric vehicle (e.g. a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system and the like, but is not limited thereto.

As the electrical apparatus, the secondary battery, the battery module or the battery pack may be selected according to the use requirements thereof.

FIG. 9 shows an electrical apparatus as an example. The electrical apparatus is a pure electric vehicle, a hybrid electric vehicle, a plug-in hybrid electric vehicle, or the like. To satisfy the need of the electrical apparatus for a high power and high energy density of secondary batteries, a battery pack or a battery module can be used.

As another example, the apparatus may be a mobile phone, a tablet, a laptop, etc. The apparatus is generally required to be light and thin, and may use a secondary battery as a power source.

### EXAMPLES

Embodiments of the present application will be described below. The embodiments described below are exemplary and are provided only to explain the present application, and should not be construed as limiting the present application. If the specific technology or conditions are not indicated in the embodiments, the technology or conditions described in the literature in the art or in accordance with the product specification shall be followed. The reagents or instruments used without manufacturer indicated are all commercially available conventional products.

### Example 1

### 1. Preparation of lithium iron phosphate particle

### 1) preparation of second lithium iron phosphate particle

Lithium carbonate, ferric oxide, phosphoric acid, glucose, titanium dioxide (based on the total weight of lithium iron phosphate particles, the addition amount of titanium dioxide satisfied that the titanium content in the prepared lithium iron phosphate particle was 5,000 ppm), and polyaniline were weighed, respectively. The weight ratio of Li, Fe, and P elements satisfied: Fe∶P = 0.968∶1 and Li∶Fe = 1∶0.98, and the weight ratio of glucose to polyaniline satisfied: glucose∶polyaniline = 1∶2. The addition amount of glucose satisfied that the carbon content accounted for 0.15% of the weight of a lithium iron phosphate precursor after the first sintering. Water was added to the aforementioned substances to obtain a mixture slurry.

The mixture slurry was mixed uniformly with a ball mill, ground with a sand mill to obtain a slurry with a solid content of 38% and a Dv50 of 0.40 µm, and spray dried (the negative pressure of the high-speed spray dryer was -650 to -200 Pascals (Pa), the inlet temperature was 300°C-360°C, and the outlet temperature was 100°C-140°C). The dried reactants were loaded into a sintering furnace for the first sintering. The heating rate was controlled at 5°C/min, the holding temperature was controlled at 650°C, and the holding time was 4 h. After the material was cooled, it was mechanically ground into powder.

Glucose as a carbon source and polyaniline as a carbon film-forming agent were added to the obtained powder, and then mixed with water to obtain a material with a solid content of 40%. The addition amount of glucose and polyaniline satisfied that: the carbon content of the product after the second sintering was 1.2% (based on the total weight of the lithium iron phosphate particle), and the weight ratio of glucose to polyaniline satisfied glucose:polyaniline = 1:2. The aforementioned materials were processed by a ball mill and a sand mill to obtain a slurry. The Dv50 of the insoluble matter in the slurry was 550 nm. Spray drying was conducted (the negative pressure of the high-speed spray dryer was -650 to -200 Pa, the inlet temperature was 300°C-360°C, and the outlet temperature was 100°C-140°C). The dried reactants were loaded into a sintering furnace for a second low-temperature sintering (with the heating rate being controlled at 5°C/min, the sintering temperature being controlled at 750°C, and the sintering time being 4 h). After the material was cooled, the material was subjected to second pulverization until the primary average particle size was 870 nm. After demagnetization, the lithium iron phosphate particle was obtained with a carbon content of 1.2% and a Ti element content of 5,000 ppm.

### 2) preparation of first lithium iron phosphate particle

The first lithium iron phosphate particle used in the present application was a commercially available product, and purchased from Guangdong Brunp Recycling Technology Co., Ltd, with a catalog number of BP-LFP-101; the second lithium manganese iron phosphate particle used in the present application was purchased from Guangdong Brunp Recycling Technology Co., Ltd, with a catalog number of BP-115.

### 2. Preparation of slurry for active layer

### 1) preparation of slurry for first active layer

The first lithium iron phosphate particle, conductive carbon black as the conductive agent, polyvinylidene fluoride as the binder, and PVP (polyvinylpyrrolidone) as the dispersant were mixed in a mass percentage of 96.0:2.5:1.0:0.5. A certain amount of N-methylpyrrolidone was added, mixed, stirred evenly and dispersed to obtain a positive electrode slurry for the first active layer. The BET specific surface area of the first lithium iron phosphate particle was greater than that of the second lithium iron phosphate particle. The first lithium iron phosphate particle had a primary average particle size of 360 nm and a Dv50 of 1.0 µm.

### 2) preparation of slurry for second active layer

The second lithium iron phosphate particle, conductive carbon black as the conductive agent, polyvinylidene fluoride as the binder, and PVP (polyvinylpyrrolidone) as the dispersant were mixed in a mass ratio of 96.5:2.5:0.5:0.5. The second lithium iron phosphate particle was olivinestructured monocrystalline lithium iron phosphate with a BET specific surface area of 7 m²/g, a Dv50 of 2.0 µm, and a primary average particle size of 500 nm. After mixing the aforementioned materials containing the positive electrode active material, a certain amount of N-methylpyrrolidone was added, stirred, and dispersed evenly to prepare the slurry for the first active layer.

### 3. Preparation of positive electrode plate

After the slurry prepared above was stirred evenly, the viscosity of the slurry was adjusted to 8,000-20,000 millipascal-seconds (mPa·s) to prevent the prepared slurry from delamination. Then, the slurry was coated onto the aluminum foil as the substrate using a double-sided double-cavity coating device. The coating weight of the slurry for the first active layer was 300 mg(milligrams)/1,540.25 cm², and the coating weight of the slurry for the second positive electrode was 100 mg/1540.25 cm². After the slurry of the first active layer and the slurry of the second positive electrode were coated, they were successively oven-dried, cold pressed, cut, and sheeted to finally obtain the positive electrode plate.

### 4. Preparation of negative electrode plate

The artificial graphite as the negative electrode active material, a conductive carbon black as the conductive agent, a styrene butadiene rubber (SBR) as the binder, and carboxyl methyl cellulose (CMC) as the thickener were mixed according to the mass ratio of 95.0:1.0:2.0:2.0, added with deionized water and stirred, and dispersed uniformly to prepare a negative electrode slurry. The negative electrode slurry was then applied to both sides of a Cu foil as the substrate, and after the coating at both sides was finished, the slurry was oven-dried, cold pressed, cut and sheeted to obtain the negative electrode plate.

### 5. Preparation of electrolyte solution

In a glove box in an argon atmosphere (H₂O < 0.1 ppm, O₂ < 0.1 ppm), ethylene carbonate (EC)/ethyl methyl carbonate (EMC) as the organic solvent was mixed uniformly in a volume ratio of 3:7, LiPF₆ as a lithium salt was dissolved in the organic solvent to prepare a solution with a weight content of 12.5% as the electrolyte solution.

### 6. Separator

A polypropylene film was used as the separator.

### 7. Preparation of battery

The positive electrode plate, the separator and the negative electrode plate in Example 1 were stacked in sequence, so that the separator was positioned between the positive electrode plate and the negative electrode plate and functioned to separate, and then a bare cell was obtained by winding, a tab was welded to the bare cell, the bare cell was mounted into an aluminum case, baked at 80°C to remove water, and then the electrolyte solution was injected and encapsulated to obtain an uncharged battery. The uncharged battery then went through procedures such as standing, hot and cold pressing, formation, shaping and capacity testing successively to obtain a lithium-ion battery product of Example 1.

The lithium-ion battery obtained in Example 1 was subjected to performance tests described later, and the results were shown in 1.

In addition, as shown in Table 1, the various parameters of the first lithium iron phosphate particle and the second lithium iron phosphate particle in the positive electrode plate were changed. In Example 11 and Comparative Example 2, the first lithium manganese iron phosphate particle (purchased from Guangdong Brunp Recycling Technology Co., Ltd., catalog number BP-115) was used. Except for this, the same procedure was carried out as in the examples, and Examples 2-14 and Comparative Examples 1-4 were obtained. The cohesive force, compaction density, and kinetic performance of the obtained positive electrode plate were determined, respectively.

### I. Determination of parameters of battery components

### 1. Primary average particle size

The positive electrode plate was cut perpendicular to the major surface of the electrode plate using an argon ion beam to expose a cross section, the cross section was photographed using a scanning electron microscope, and the longest diameter of the lithium (manganese) iron phosphate particle was statistically analyzed by the aspect ratio statistical method. The "primary average particle size" refers to an average of primary particle sizes of all particles, which is numerically equal to a total of particle size values divided by the total number of particles. In the cross-sectional view, the primary particle size referred to the longest distance connecting two points through the edge. Specifically, the total number of the lithium (manganese) iron phosphate particles with a primary particle size greater than 50 nm and the sum of primary particle sizes of the lithium (manganese) iron phosphate particles with the primary particle size greater than 50 nm could be counted in the scanning electron micrograph, and the primary average particle size of the lithium (manganese) iron phosphate particle = total primary particle sizes of the lithium (manganese) iron phosphate particles/the total number of the lithium (manganese) iron phosphate particles. During the aforementioned particle size statistics process, particles with a primary average particle size of less than or equal to 50 nm were not included in the statistical range.

### 2. BET specific surface area

The specific surface area was tested by a gas adsorption method according to a GB/T19587-2017 test standard, which was particularly as follows: lithium (manganese) iron phosphate was taken as a sample, the sample tube was immersed in liquid nitrogen at -196°C, the adsorption amount of nitrogen on the solid surface under different pressures at a relative pressure of 0.05-0.30 was determined, the adsorption amount of a monomolecular layer of the sample was solved based on a BET multilayer adsorption theory and a formula thereof, and thus the specific surface area of the material was calculated.

### 3. Dv50

With reference to GB/T19077.1-2016, the Dv50 value of the lithium (manganese) iron phosphate particle was determined using a laser particle size analyzer (Malvern Master Size 3000). In addition, the Dv10, Dv90, and Dv99described in the present application were also determined.

### 4. Carbon content

After burning the lithium (manganese) iron phosphate particle in a high-frequency induction furnace, the carbon content was tested by an infrared absorption method. The specific testing procedure was in accordance with the standard GB/T 20123-2006/ISO 15350:2000.

### 5. Sphericity

After cold pressing, the electrode plate was cut perpendicularly to a major surface direction of the electrode plate using an Ar particle beam to expose an end face, and images were obtained using a scanning electron microscope. Subsequently, the scanning electron micrographs of the electrode plate cross-section were analyzed using image software to measure the major axis a and minor axis b of the particle, and a ratio of them was acquired, which was the aspect ratio of the particle.

### 6. Cohesion force

A copper plate with a flat appearance was selected, and the surface of the copper plate was wiped with lint-free paper and alcohol. A double-sided tape (model: nitto tape) was adhered to the copper plate. The tape had a width of 20 mm × a length of 150 mm. The tape was parallel to the edge of the steel plate, and the distance from the tape to both edges of the steel plate was equal. The electrode plate to be tested was taken and a specimen with a width of 25 mm × a length of 160 mm was cut from it with a blade. The cut electrode plate specimen was adhered to the double-sided tape, with the edge of the electrode palte being aligned with the edge of the copper plate, and the fitting between the electrode plate and the double-sided tape being ensured to be flat. Copper glue with a length of about 30 mm was used, ensuring that the copper glue was parallel to the electrode plate to be tested. Then a 2 kilograms (kg) pressure roller was utilized to roll back and forth for 3-4 times. The copper glue was folded upwards, and the end of the copper plate where the electrode plate was not adhered was fixed with a lower clamp. The upper clamp held the paper tape parallel to the copper plate. Then the test was conducted on a computer connected to a tensile machine (model: INSTRON). First, pre-tension of 3 mm was conducted at a speed set to 10 millimeters/minutes (mm/min), and a displacement distance of 15 mm. After the data was obtained, the data of 8-15 mm was intercepted, and pre-tension of 3 mm was conducted for each time of testing. The test was repeated for four times, and the average value was taken as the cohesion force.

### 7. Compacted density of electrode plate

The compacted density of the film layer on one side of the electrode plate = m/(V1 - V2), where m represented the weight of the film layer, V1 represented the volume of the electrode plate, and V2 represented the volume of the current collector. m could be obtained by subtracting the weight of the current collector from the weight of the electrode plate. The product of the surface area of the electrode plate and the thickness of the electrode plate was the volume V1 of the electrode plate. The product of the surface area of the electrode plate and the thickness of the current collector was V2. The thickness of the current collector and the thickness of the electrode plate were obtained by measuring the thickness of the empty foil in the tab area with a micrometer.

### II. Determination of battery performance

### 1. Capacity ratio (η value) of battery discharged at 1 C to 3.2V

The preparation and testing process of the battery was: 2.0000 g of a sample was mixed with 0.1111 g of conductive carbon black and 0.1111 g of PVDF (at a mass ratio of 0.9:0.05:0.05), and then added with 2.5 g of NMP (N-methylpyrrolidone) as the organic solvent. After thorough mixing, the mixture was coated on the aluminum foil to form a film with a thickness of 140 µm. The film was then oven-dried under vacuum at 120°C for 2 h, punched into a disc with a diameter of 13 mm with a punch, and pressed at 10 MPa with a tablet press. The disc was then vacuum insulated at 120°C for 12 h. The weight of the positive electrode plate was weighed, and the loading of the active material was 11 mg-12 mg. A button battery was assembled in an argon-protected glove box, with a lithium metal sheet as the negative electrode, a mixed solvent of EC (ethylene carbonate) and DMC (1,2-dimethyl carbonate) in a volume ratio of 1:1 as the electrolyte solution, LiPF₆ as the electrolyte, and a Celgard 2400 microporous polyethylene membrane as the separator. The electrical performance of the installed battery was tested on a LAND tester. Within a voltage range of 2.0 V-3.75 V, the specific capacity was tested by charging/discharging at a constant current of 0.1 C for two weeks, followed by charging/discharging at a constant current of 1 C for two weeks. There was always a constant voltage process during charging, with a constant voltage of 3.75 V and a constant voltage cutoff current of 50 uA.

A battery including the second lithium iron particle as a positive electrode material is charged and discharged at a constant current and at a rate of 0.1 C twice in the voltage range of 2.0 V-3.75 V, and then charged and discharged at a constant current and at a rate of 1 C once, in the charge-discharge test with the rate of 1 C, a capacity value at a discharge voltage of 3.2 V is extracted and denoted as C1, and a capacity value at a discharge voltage to 2.0 V is extracted and denoted as C2, and η = C1/C2, wherein the charging process includes charging at a constant voltage of 3.75 V and a constant-voltage cutoff current of 50 uA.

### 2. Determination of kinetic performance (10% SOC DCR)

In the present application, the dynamic performance of the battery was specifically embodied in the measurement of DC internal resistance (power performance).

Power performance test at 25°C:
Capacity calibration: the lithium-ion batteries prepared in each example and comparative example were kept at 25°C for 2 h, then charged at a constant current of 0.33 C to 3.65 V, and then charged at a constant voltage of 3.65 V to 0.05 C. After charging was completed, the batteries were left to stand at 25°C for 2 h, and then discharged at a DC current of 0.33 C to 2.5 V. The discharge capacity at room temperature was recorded as C0.

Adjusting of SOC (state of charge of the battery): the calibrated lithium-ion battery was kept at 25°C for 2 h, then discharged at a discharge rate of 1/3C0 for 144 min to adjust the capacity of the lithium-ion battery to 10% SOC.

Power test: after the lithium-ion battery with 10% SOC is left to stand at 25°C for 2 h, it is discharged for 30 seconds (s) at a discharge rate of 3C0 under a pulse current I. The voltage before the 3C0 discharge is recorded as V1 and the voltage at the end of the 30 s discharge is recorded as V2. The value of (V1 - V2)/I is calculated. This data can characterize the power performance of the battery. When the value of the aforementioned kinetic performance was lower, it represented that the kinetic performance of the battery was better.

### III. Parameters and performance of Examples and Comparative examples

The batteries in various Examples and Comparative examples were prepared respectively according to the aforementioned methods, and various performance parameters were measured, specially as shown in Table 1.

**Table 1**

| | First lithium iron phosphate particle and/or first lithium manganese iron phosphate particle | | | | | Second lithium iron phosphate particle LSC | | | | |
|---|---|---|---|---|---|---|---|---|---|---|
| Examples | Primary average particle size (nm) | Thickness (nm) | BET specific surface area (m²/g) | Ti content (ppm) | C content (%) | Primary average particle size (nm) | Thickness (nm) | BET specific surface area (m²/g) | Ti content (ppm) | C content (%) |
| Example 1 | 360 | 98 | 12.8 | 800 | 1.3 | 500 | 8 | 7 | 5000 | 1.20 |
| Example 2 | 360 | 98 | 12.8 | 800 | 1.3 | 870 | 8 | 6 | 5000 | 1.20 |
| Example 3 | 360 | 98 | 12.8 | 800 | 1.3 | 3000 | 8 | 5 | 5000 | 1.20 |
| Example 4 | 150 | 98 | 15 | 1200 | 1.35 | 870 | 8 | 6 | 5000 | 1.20 |
| Example 5 | 480 | 98 | 11 | 1200 | 1.35 | 870 | 8 | 6 | 5000 | 1.20 |
| Example 6 | 360 | 80 | 12.8 | 800 | 1.3 | 870 | 26 | 6 | 5000 | 1.20 |
| Example 7 | 360 | 140 | 12.8 | 800 | 1.3 | 870 | 8 | 6 | 5000 | 1.20 |
| Example 8 | 360 | 86 | 12.8 | 800 | 1.3 | 870 | 20 | 6 | 5000 | 1.20 |
| Example 9 | 360 | 71 | 12.8 | 800 | 1.3 | 870 | 35 | 6 | 5000 | 1.20 |
| Example 10 | 360 | 56 | 12.8 | 800 | 1.3 | 870 | 50 | 6 | 5000 | 1.20 |
| Example 11 | 360 | 98 | 12.8 | 800 | 1.3 | 870 | 8 | 6 | 5000 | 1.20 |
| Example 12 | 360 | 98 | 12.8 | 800 | 1.3 | 870 | 8 | 6 | 2500 | 1.20 |
| Example 13 | 360 | 98 | 12.8 | 800 | 1.3 | 870 | 8 | 6 | 6000 | 1.20 |
| Example 14 | 360 | 98 | 12.8 | 800 | 1.3 | 1200 | 8 | 3 | 5000 | 1.00 |
| Comparative example 1 | 360 | 98 | 12.8 | 800 | 1.3 | Not set | | | | |
| Comparative example 2 | 360 | 98 | 12.8 | 800 | 1.3 | Not set | | | | |
| Comparative example 3 | 120 | 98 | 14.5 | 800 | 1.5 | 870 | 8 | 6 | 5000 | 1.2 |
| Comparative example 4 | 800 | 98 | 11.5 | 800 | 1.25 | 870 | 8 | 6 | 5000 | 1.2 |

| | Thickness ratio of the first active layer and the second active layer | Cohesion force of the positive electrode plate (N/m) | Compaction density of the electrode plate (g/cm³) | 10% SOC DCR |
|---|---|---|---|---|
| Examples | | | | |
| Example 1 | 12.3 | 48 | 2.50 | 1525 |
| Example 2 | 12.3 | 56 | 2.50 | 1540 |
| Example 3 | 12.3 | 48 | 2.47 | 1560 |
| Example 4 | 12.3 | 56 | 2.40 | 1470 |
| Example 5 | 12.3 | 56 | 2.42 | 1610 |
| Example 6 | 3.1 | 56 | 2.46 | 1290 |
| Example 7 | 17.5 | 56 | 2.44 | 1710 |
| Example 8 | 4.3 | 56 | 2.47 | 1400 |
| Example 9 | 2.0 | 56 | 2.44 | 1275 |
| Example 10 | 1.1 | 56 | 2.42 | 1245 |
| Example 11 | 12.3 | 56 | 2.35 | 1300 |
| Example 12 | 12.3 | 56 | 2.50 | 1600 |
| Example 13 | 12.3 | 56 | 2.50 | 1480 |
| Example 14 | 16.7 | 80 | 2.48 | 1550 |
| Comparative example 1 | / | 20 | 2.30 | 980 |
| Comparative example 2 | / | 24 | 2.52 | 1680 |
| Comparative example 3 | 12.25 | 56 | 2.32 | 1470 |
| Comparative example 4 | 12.25 | 56 | 2.3 | 1820 |

It could be seen from Table 1 that, the positive electrode plates of Examples 1-14 of the present application each included a first active layer and a second active layer. The first active layer included a first lithium iron phosphate particle and/or a first lithium manganese iron phosphate particle, and the second active layer included a second lithium iron phosphate particle. The primary average particle size of the second lithium iron phosphate particle was greater than that of the first lithium iron phosphate particle and/or the first lithium manganese iron phosphate particle, and both primary average particle sizes of them were within a specific range. The final resulting secondary battery had excellent kinetic performance and excellent battery performance.

Furthermore, as could be seen from Table 1 that, in Comparative Examples 1-4 of the present application, Comparative Examples 1-2 were provided with neither the first active layer nor the second active layer. Although Comparative Examples 3-4 were provided with the first active layer and the second active layer, the primary average particle size of the first lithium iron phosphate particle and/or the first lithium manganese iron phosphate particle was too large or too small. As a result, the kinetic performance of the final resulting secondary battery was significantly reduced compared to the Examples of the present application, and could not meet the performance requirements of the present application.

It is to be noted that the present application is not limited to the embodiments. The embodiments are merely examples, and any embodiments that have substantially the same configuration and achieve the same effects within the scope of the technical solutions of the present application are included within the scope of the present application. In addition, without departing from the main idea of the present application, various modifications that those skilled in the art can conceive, as well as other methods formed by combining some of the constituent elements of the embodiments, are also included within the scope of the present application.

## Claims

1. A positive electrode plate, comprising a current collector and a positive electrode active layer arranged on at least one face of the current collector,
wherein the positive electrode active layer comprises a first active layer directly coated on the current collector, and a second active layer coated on a surface of the first active layer on the side away from the current collector,
the first active layer comprises a first lithium iron phosphate particle and/or a first lithium manganese iron phosphate particle, and the second active layer comprises a second lithium iron phosphate particle,
a primary average particle size of the first lithium iron phosphate particle and/or the first lithium manganese iron phosphate particle is 150 nm-480 nm, and a primary average particle size of the second lithium iron phosphate particle is 500 nm-3,000 nm.

2. The positive electrode plate according to claim 1, wherein a cohesion force of the positive electrode plate is ≥ 32 N/m.

3. The positive electrode plate according to claim 1 or 2, wherein a thickness of the first active layer is in a range of 80 µm-140 µm, and a thickness of the second active layer is in a range of 8 µm-50 µm.

4. The positive electrode plate according to any one of claims 1 to 3, wherein a BET specific surface area of the first lithium iron phosphate particle and/or the first lithium manganese iron phosphate particle is 10 m²/g-18 m²/g, and
a BET specific surface area of the second lithium iron phosphate particle is 3 m²/g-8 m²/g.

5. The positive electrode plate according to any one of claims 1 to 4, wherein the sphericity of the first lithium iron phosphate particle and/or the first lithium manganese iron phosphate particle is ≤ 1.3, and the sphericity of the second lithium iron phosphate particles is ≥ 1.5.

6. The positive electrode plate according to any one of claims 1 to 5, wherein the first lithium iron phosphate particle and/or the first lithium manganese iron phosphate particle has a molecular formula of Li_{x'}M1_{y'}Mn_{m'}Fe_{z'}M2_{k'}PO₄, wherein the M1 comprises at least one or a combination of two or more of Na, K, Ca, Al and Mg, and the M2 comprises one or a combination of two or more of Ni, Cu, Zn, Ti, Nb, V, Cr and Co,
0.95 ≤ x' ≤ 1.15, 0 ≤ y' ≤ 0.1, 0.1 ≤ m' ≤ 0.9, 0.1 ≤ z' ≤ 1, 0 ≤ k' ≤ 0.1, and a content of the Mn is ≤ 1,000 ppm.

7. The positive electrode plate according to any one of claims 1 to 6, wherein the second lithium iron phosphate particle has a molecular formula of LiₘFeₓP_{y}OⱼQ_{q}, wherein the Q comprises at least one of Al, Na, K, Mg, Cu, Mn, Cr, Zn, Pb, Ca, Co, Ni, Sr, Nb, V, Ti, B, S, Si, N, S, F, Cl, and Br, 0.95 ≤ m ≤ 1.15, 0.9 ≤ x ≤ 1, 0.95 ≤ y ≤ 1, 3.5 ≤ j ≤ 4, and 0 < q ≤ 0.1.

8. The positive electrode plate according to claim 7, wherein the Q comprises at least one of Ti, V, Mg and Nb,
a content of the Q is 1,000 ppm-10,000 ppm based on a total weight of the second lithium iron phosphate particle.

9. The positive electrode plate according to any one of claims 1 to 8, wherein the second lithium iron phosphate particle contains carbon, and a content of the carbon is 1.0%-2.0% by weight based on the total weight of the second lithium iron phosphate particle.

10. The positive electrode plate according to any one of claims 1 to 9, wherein the first lithium iron phosphate particle and/or the first lithium manganese iron phosphate particle and the second lithium iron phosphate particle are each independently a single crystal particle and/or a polycrystalline particle.

11. The positive electrode plate according to any one of claims 1 to 10, wherein
a capacity ratio η of the second lithium iron phosphate particle is ≥ 88%, and the η is defined as: charging and discharging a battery comprising the second lithium iron phosphate particle as a positive electrode material at a constant current and at a rate of 0.1 C twice in the voltage range of 2.0 V-3.75 V, and then charging and discharging at a constant current and at a rate of 1 C once, in the charge-discharge test with the rate of 1 C, a capacity value at a discharge voltage of 3.2 V is extracted and denoted as C1, and a capacity value at a discharge voltage to 2.0 V is extracted and denoted as C2, and η = C1/C2, wherein the charging process comprises charging at a constant voltage of 3.75 V and a constant-voltage cutoff current of 50 uA.

12. The positive electrode plate according to any one of claims 1 to 11, wherein a process for manufacturing the second lithium iron phosphate particle comprises: providing a raw material containing at least a lithium source, an iron source, a phosphorus source, a carbon source, a carbon film-forming agent, and a modifier, and performing sintering for at least two times, wherein,
a first sintering is conducted at a temperature of 500°C-760°C, and a carbon content of the material after the first sintering is 0.01%-0.79% by weight; and
a second sintering is conducted at a temperature of 700°C-800°C, and a carbon content of the material after the second sintering is 0.8%-2.0% by weight.

13. The positive electrode plate according to claim 12, wherein in the process for manufacturing the second lithium iron phosphate particle, a first pulverization is performed after the first sintering, and a second pulverization is performed after the second sintering, wherein
a Dv50 of a product after the first pulverization is 300 nm-1,200 nm; and
a Dv50 of a product after the second pulverization is 500 nm-5,000 nm.

14. The positive electrode plate according to any one of claims 1 to 13, wherein the first active layer and the second active layer further comprise a conductive agent and a binder, wherein
in the first active layer, a weight proportion of the first lithium iron phosphate particle and/or the first lithium manganese iron phosphate particle:the binder:the conductive agent:a dispersant is 96-99:0.5-3:0.5-3:0.5-3;
in the second active layer, a weight proportion of the second lithium iron phosphate particle:the binder:the conductive agent:a dispersant is 96-99:0.5-3:0.5-3:0.5-3; and
a weight ratio of the binder in the first active layer is less than or equal to a weight ratio of the binder in the second active layer.

15. The positive electrode plate according to claim 14, wherein the conductive agent comprises any one or a combination of at least two of natural graphite, artificial graphite, conductive carbon black, a carbon fiber, a carbon nanotube, graphene, and a conductive polymer or metal powder, and
the binder comprises any one or a combination of at least two of polyvinylidene fluoride, a copolymer of vinylidene fluoride and hexafluoropropylene, or polytetrafluoroethylene.

16. A secondary battery, having the positive electrode plate according to any one of claims 1-15.

17. An electrical apparatus, having the secondary battery according to claim 16.
